# EUROPÄISCHE PATENTANMELDUNG

(11) **EP 2 530 447 A2**
(43) Veröffentlichungstag der Anmeldung: **05.12.2012**
(21) Anmeldenummer: 12181726.6
(22) Anmeldetag: 24.07.2003
(51) Int. Cl.: G01M 1/04, G01M 1/06

(54) **Unwucht-Messvorrichtung**

(30) Priorität: 25.07.2002 DE 10233917
(62) Teilanmeldung aus: 03771099.3
(71) Anmelder: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Liska, Horst

(57) **Zusammenfassung**

Die Unwuchtmessvorrichtung umfasst eine Spindeleinheit (7) mit einem Spindelhalter (29) und einer an dem Spindelhalter (29) um eine Drehachse (9) drehbar gelagerten, an einem ihrer beiden Enden eine Kupplung zur Befestigung des zu messenden Gegenstands tragenden Spindel (11). Die Spindeleinheit (7) ist zusammen mit einem die Spindel (11) antreibenden Elektromotor (5) zu einer ersten vormontierten Baugruppe vereinigt. Der Spindelhalter ist seinerseits mittels einer Halteraufhängung (49) an einer Maschinenbasis (1) lösbar befestigt, wobei die Halteraufhängung (49) ihrerseits eine vormontierte Baugruppe zusammen mit einer die Unwuchtkräfte im Betrieb messenden Sensoranordnung (61) vereinigt ist. Für die lösbare Befestigung der beiden Baugruppen aneinander sind indexiert zugeordnete Verbindungselemente, beispielsweise eine Schwalbenschwanzverbindung (77) vorgesehen. Da die beiden Baugruppen vormontiert sind, können sie bei einer Reparatur vor Ort ausgetauscht werden, ohne dass es aufwändiger Justiermaßnahmen bedarf.

## Beschreibung

Die Erfindung betrifft eine Vorrichtung zum Messen der Rotationsunwucht eines Gegenstands, beispielsweise eines Maschinenelements oder eines Werkzeughalters.

Die Spindel moderner rotierender Werkzeugmaschinen, beispielsweise Bohr- oder Fräsmaschinen, arbeiten mit sehr hohen Drehzahlen von 20.000 U/min. und darüber. Bei diesen Drehzahlen treten bereits bei geringer Unwucht hohe Fliehkräfte auf, die nicht nur die Spindellager der Werkzeugmaschine belasten, sondern auch die Standzeit des Werkzeugs wie auch das Bearbeitungsergebnis verschlechtern. Der Werkzeughalter wird deshalb üblicherweise auf Auswuchtmaschinen, wie sie beispielsweise aus WO 00/45 983 bekannt sind, mit oder ohne eingesetztem Werkzeug vor dem Einsatz in der Werkzeugmaschine ausgewuchtet.

Um die Unwucht des auszuwuchtenden Gegenstands nach Größe und Richtung hinreichend genau messen zu können, werden an die Unwuchtfreiheit und an die Justierung der Auswuchtmaschine höchste Anforderungen gestellt, nachdem eine Eigenunwucht der Auswuchtmaschine das Messergebnis verfälschen würde. Wege, die Eigenunwucht der Auswuchtmaschine in hohem Maße zu verringern, werden in WO 00/45 983 beschrieben.

Während bei der Herstellung der Auswuchtmaschine hohe Präzision gewährleistet werden kann, lässt sich ein entsprechender Genauigkeitsgrad bei einer Reparatur "vor Ort" bei herkömmlichen Maschinen nicht erreichen. Eine Rücksendung der Auswuchtmaschine zur werkseitigen exakten Justierung ist hingegen angesichts des üblicherweise hohen Gesamtgewichts der Maschine mit hohem Aufwand verbunden.

Es ist Aufgabe der Erfindung, einen Weg zu zeigen, wie eine einfache "Vor-Ort"-Reparatur einer Unwuchtmessvorrichtung erreicht werden kann.

Die Erfindung geht aus von einer Vorrichtung zum Messen der Rotationsunwucht eines Gegenstands, umfassend:
- eine Spindeleinheit mit einem Spindelhalter und einer an dem Spindelhalter um eine Drehachse drehbar gelagerten, an einem ihrer beiden Enden eine Kupplung zur Befestigung des Gegenstands tragenden Spindel;
- eine den Spindelhalter in einer vorbestimmten Messrichtung für Unwuchtkräfte auslenkbar, quer zur vorbestimmten Messrichtung für Unwuchtkräfte vorzugsweise jedoch steif führende Halteraufhängung zur Befestigung der Spindeleinheit an einer Maschinenbasis;
- einen die Spindel rotierend antreibenden Elektromotor und
- eine bei Rotation der Spindel die Unwuchtkraft in der vorbestimmten Messrichtung messende Sensoranordnung.

Die erfindungsgemäße Verbesserung ist **dadurch gekennzeichnet, dass** die Spindeleinheit und der Elektromotor zu einer ersten vormontierten Baugruppe und die Halteraufhängung und die Sensoranordnung zu einer zweiten vormontierten Baugruppe vereinigt sind und dass die beiden Baugruppen einander indexiert zugeordnete Verbindungselemente für die betriebsmäßig lösbare Befestigung der Baugruppen aneinander tragen.

Die für die Messgenauigkeit relevanten Komponenten sind hierbei zu Baugruppen zusammengefasst, die jeweils für sich, beispielsweise im Herstellerwerk, vormontiert und entsprechend den Anforderungen justiert und überprüft werden können. Bei einem Defekt einer der Baugruppen kann die defekte Baugruppe vor Ort ausgetauscht werden, ohne dass eine Nachjustierung erforderlich ist. Die einander indexiert zugeordneten Verbindungselemente sorgen für die korrekte Ausrichtung der Baugruppen zueinander. Insbesondere muss die aufgrund ihres normalerweise hohen Gewichts nur schwer transportierbare Maschinenbasis nicht örtlich verändert werden.

Die beiden Baugruppen können Bestandteile einer ausschließlich für Auswuchtzwecke vorgesehenen Auswuchtmaschine sein. Die Erfindung beschränkt sich jedoch nicht auf einen solchen Anwendungsfall. Die beiden Baugruppen können die Unwuchtmessfunktion auch in Zusammenhang mit anderen Maschinen oder Geräten realisieren. Z.B. kann die Unwuchtmessvorrichtung Bestandteil eines das Werkzeug in einen Werkzeughalter einschrumpfenden Schrumpfgeräts sein, wie es beispielsweise in WO 01/89 758 A1 beschrieben ist. Auch die Verbindung der Unwuchtmessvorrichtung mit einem die Bezugslänge eines in einem Werkzeughalter eingespannten Werkzeugs ermittelnden oder einstellenden Voreinstellgeräts ist vorteilhaft. Schließlich kann die Unwuchtmessvorrichtung auch Bestandteil der Werkzeugmaschine selbst sein.

Ein weiteres Ziel der Erfindung ist es, die Unwuchtfreiheit der Unwuchtmessvorrichtung zu verbessern. Es hat sich gezeigt, dass der zu einer Baugruppe mit dem Spindelhalter vereinigte Elektromotor bei einer evtl. Eigenunwucht des Motors Schwingungen erzeugen kann, die die Messgenauigkeit vermindern. Ist der Elektromotor, wie es aus Gründen eines einfachen mechanischen Aufbaus erwünscht ist, gegen die Drehachse der Spindel versetzt achsparallel neben der Spindel angeordnet und an dem Spindelhalter befestigt, so übt der Elektromotor über den Spindelhalter ein von evtl. Unwuchtschwingungen moduliertes Kragmoment auf die Sensoranordnung aus. Um dieses Kragmoment möglichst klein zu halten, sollte der Elektromotor zur Minderung des Momentenarms mit möglichst geringem Abstand zur Sensoranordnung angebracht sein. Diesem Ziel dient es, wenn der Elektromotor so angeordnet ist, dass eine die Drehachsen des Elektromotors und der Spindel enthaltende Ebene gegen eine zur vorbestimmten Messrichtung senkrechte axiale Längsebene der Spindel geneigt ist.

Gleichfalls der Minderung von Messfehlern aufgrund von Unwuchtschwingungen dient es, wenn der Elektromotor und der Spindelhalter auf derselben Seite eines gemeinsamen Verbindungsjochs an diesem angeflanscht sind, insbesondere wenn das der Befestigungskupplung ferne Ende der Spindel mittels eines Endlos-Antriebsriemens in Antriebsverbindung mit dem Elektromotor steht. Der Antriebsriemen kann auf diese Weise sehr nahe dem Verbindungsjoch angeordnet werden, was der mechanischen Stabilität und der Schwingungsfreiheit der Antriebsverbindung zugute kommt. Nicht zuletzt ergibt sich auf diese Weise ein sehr einfacher und leicht zu montierender mechanischer Aufbau der ersten Baugruppe.

Die Befestigungskupplung der Spindeleinheit umfasst zweckmäßigerweise eine pneumatische Betätigungsvorrichtung, wie sie beispielsweise in WO 00/45983 beschrieben ist. Der Aufbau der Druckluftzuführung der pneumatischen Betätigungsvorrichtung kann jedoch vereinfacht werden, wenn diese eine am Spindelhalter gehaltene in ständigem Dreheingriff mit der Spindel stehende Druckluft-Drehkupplung umfasst. Anders als in WO 00/45983 beschrieben, kann auf das Lösen der Druckluft-Drehkupplung während des Messbetriebs verzichtet werden, wenn die Drehkupplung relativ zu dem die Spindel führenden Spindelhalter fixiert ist, die Drehkupplung also nicht durch Radialschwingungen der Spindel belastet wird.

In einer bevorzugten Ausgestaltung umfasst die Halteraufhängung zwei in der vorbestimmten Messrichtung auslenkbar miteinander verbundene Halterelemente, von denen eines mit dem Spindelhalter und das andere mit der Maschinenbasis verbindbar ist. Die Sensoranordnung weist wenigstens einen zwischen den beiden Halterelementen gehaltenen Kraftsensor auf. Eine solche Baugruppe ist mechanisch stabil und der Kraftsensor kann geschützt zwischen den beiden Halterelementen untergebracht werden.

Die Halterelemente können im Abstand voneinander angeordnet und von wenigstens einem in Abstandsrichtung steifen, quer dazu zumindest in Messrichtung flexiblen Abstandhalter, insbesondere jedoch mehreren solchen Abstandhalter aneinander gehalten sein. Eine solche Halteraufhängung ist mechanisch stabil und kann das Gewichtsmoment der Baugruppe aufnehmen, insbesondere wenn die Messrichtung horizontal verläuft. Die Abstandhalter sind zweckmäßigerweise als Blattfedern ausgebildet, deren Blattfederebene senkrecht zur Messrichtung verläuft und damit im Wesentlichen ausschließlich in Messrichtung flexibel sind. In diesem Zusammenhang soll jedoch darauf hingewiesen werden, dass die Abstandhalter lediglich in sehr geringem Maße flexibel sein müssen, da die Kraftsensoren, bei welchen es sich beispielsweise um piezoelektrische Kraftsensoren handeln kann, für die Kraftmessung mit äußerst geringen Auslenkwegen auskommen. Im Prinzip können anstelle der Blattfedern auch Abstandbolzen oder dgl. verwendet werden. Soweit die Halterelemente quer zur Messrichtung im Abstand voneinander angeordnet sind, haben die Halterelemente bevorzugt paarweise aufeinanderzu abstehende Vorsprünge, zwischen welchen der Kraftsensor angeordnet ist.

In einer Variante können die Halterelemente der Halteraufhängung im Abstand voneinander angeordnet sein und von wenigstens einem in der die Messrichtung definierenden Abstandsrichtung flexiblen, quer dazu im Wesentlichen steifen Abstandhalter aneinander gehalten sein. In dieser Ausgestaltung sind die Halterelemente für die Kraftmessung in ihrer Abstandrichtung zumindest geringfügig beweglich, jedenfalls beweglicher als in den übrigen, zur Aufnahme der Gewichtsmomente der ersten Baugruppe bestimmten Richtung. Der Abstandhalter kann in dieser Ausgestaltung beispielsweise als U-förmige Schenkelfeder ausgebildet sein und ggf. einteilig mit den Halterelementen ausgebildet sein.

Um längs der Drehachse ungleichmäßig verteilte und damit zu Taumelbewegungen der Drehachse der Spindel führende Unwuchtgrößen messen zu können, hat die Sensoranordnung bevorzugt zwei in Richtung der Drehachse der Spindel im Abstand voneinander angeordnete, zwischen den beiden Halterelementen gehaltene Kraftsensoren. Zweckmäßigerweise sind die Kraftsensoren bezogen auf eine zur Kraftmessrichtung senkrechte Axiallängsebene der Spindel an den beiden Halterelementen gespiegelt abgestützt, so dass die beiden Kraftsensoren stets von gleichsinnigen Kräften entweder gedrückt oder gezogen werden. Kraftrichtungsabhängige Kennlinienunterschiede der beiden Kraftsensoren können sich auf diese Weise nicht auswirken, was der Messgenauigkeit zugute kommt. Die Messgenauigkeit wird weiterhin erhöht, wenn jedem Kraftsensor ein dem Kraftsensor in der vorbestimmten Kraftmessrichtung vorspannendes Federelement zugeordnet ist. Aufgrund der Vorspannung kann der Kraftsensor in der Kraftmessrichtung punktgestützt werden, z.B. zwischen zwei Spitzen eingespannt werden, so dass keine das Messergebnis verfälschenden Querkräfte in den Kraftsensor eingeleitet werden können. Auch das Federelement kann zwischen Spitzen gelagert sein, um auch hier Querkraftfehler zu vermeiden.

Im Prinzip können der Kraftsensor und das ihm zugeordnete Federelement in Serie zwischen den beiden Halterelementen eingespannt sein. Allerdings lässt sich bei dieser Ausgestaltung die Vorspannkraft nicht unabhängig von den hierdurch auf die Halteraufhängung, beispielsweise deren Blattfedern ausgeübten Reaktionskraft einstellen. Von der Reaktionskraft auf die Halteraufhängung unabhängige Justierung der Vorspannung wird erreicht, wenn der Kraftsensor und das ihm zugeordnete Federelement in Serie zueinander an einem der beiden Halterelemente vorgespannt abgestützt sind und das andere Halterelement im Kraftweg zwischen dem Kraftsensor und dem Federelement an dem Kraftsensor abgestützt ist. Der Reaktionskraftweg des Federelements schließt sich hierbei über dieses eine Halterelement und nicht über dessen flexible Abstandhalter.

Die Verbindungselemente, die die beiden Baugruppen lösbar miteinander verbinden, sorgen für eine indexierte Zuordnung der Drehachse der Spindel zur Messrichtung des Kraftsensors und zwar bevorzugt sowohl hinsichtlich des Abstands als auch der Richtung. In einer bevorzugten Ausgestaltung haben die Verbindungselemente der beiden Baugruppen zur Anlage aneinander bestimmte Fügeflächen, die eine vorbestimmte Positionierung der Verbindungselemente relativ zueinander in der vorbestimmten Messrichtung und wenigstens einer dazu senkrechten Richtung ermöglichen. Eine besonders exakte und dennoch leicht lösbare Verbindung der beiden Baugruppen ermöglichen als Schwalbenschwanzführung ausgebildete Verbindungsmittel, insbesondere wenn zur Fixierung Klemmmittel genutzt werden. Eine solche Schwalbenschwanzführung hat unter einem spitzen Winkel zueinander verlaufende Führungsflächenpaarungen, die eine exakte Positionierung in zwei zueinander senkrechten Koordinatenrichtungen erlaubt. In der dritten Koordinatenrichtung ist zweckmäßigerweise ein indexierender Endanschlag in Verschieberichtung der Schwalbenschwanzführung vorgesehen. Nachdem das die Befestigungskupplung tragende Ende der Spindel in aller Regel frei zugänglich ist, wird die Montage der ersten Baugruppe sehr erleichtert, wenn die Verschieberichtung der Schwalbenschwanzführung in Richtung der Drehachse der Spindel verläuft.

Ein weiterer Vorteil einer solchen Schwalbenschwanzführung ist ihr vergleichsweise geringer Platzbedarf quer zur Trennebene. Die Spindeleinheit und damit auch der Elektromotor kann auf diese Weise näher an die Sensoranordnung zur Minderung von Messfehlern aufgrund von Unwuchtmomenten herangebracht werden. Insbesondere kann die Schwalbenschwanzführung Schwalbenschwanz-Führungsflächen aufweisen, von denen eine unmittelbar an dem Spindelhalter angeformt ist, speziell dann, wenn der Spindelhalter im Wesentlichen eine zylindrische Außenkontur hat, die die angeformte Schwalbenschwanz-Führungsfläche außen umschließt. Ein solcher Spindelhalter kann auf sehr einfache Weise einschließlich der Schwalbenschwanz-Führungsfläche integral aus einem Zylinderrohr hergestellt werden.

Im Prinzip kann beim Montieren der Baugruppen die Schwalbenschwanzführung von ihren sich gegenüberliegenden Stirnenden her eingefädelt werden. Da jedoch vielfach an den Baugruppen noch elektrische Kabel oder Pneumatikleitungen angeschlossen sind, deren Länge den Verschiebeweg berücksichtigen müsste, ist es günstiger, wenn die einander zugeordneten Schwalbenschwanzführungsflächen Bajonett-Aussparungen aufweisen, die ein Zusammenstecken der Verbindungselemente quer zur Verschieberichtung der Schwalbenschwanzführung erlauben. Diese Ausgestaltung erleichtert nicht zuletzt die Montage bei beengten Platzverhältnissen. Angestrebt wird eine möglichst direkte Ankopplung der Spindeleinheit an die Sensoranordnung. Dies lässt sich beispielsweise dadurch erreichen, dass die Verbindungsmittel an dem Spindelhalter der Halteraufhängung vorgesehen sind.

Die Unwuchtmessvorrichtung bestimmt die Unwucht sowohl der Größe nach als auch gemäß der Winkellage relativ zur Drehachse der Spindel. Herkömmliche Unwuchtmessvorrichtungen haben zwei gesonderte Drehwinkelsensoren, von denen ein erster den absoluten Drehwinkel misst und ein zweiter eine Bezugslage der Spindel, d.h. eine Null-Punkt-Lage erfasst, relativ zu der der erste Drehwinkelsensor den Drehwinkel messen soll. Die Notwendigkeit zwei Drehwinkelsensoren vorsehen zu müssen, erhöht nicht nur den Bauaufwand, sondern erschwert die Montage, bei der die beiden Drehwinkelsensoren justiert werden müssen. Darüber hinaus sind die herkömmlichen Drehwinkelsensoren vielfach nicht direkt an der Spindel montiert, sondern beispielsweise an dem Elektromotor, was zu Messfehlern führt.

Unter einem weiteren Aspekt der Erfindung, der auch selbständige Bedeutung hat, ist vorgesehen, dass an einem der axialen Enden der Spindel, insbesondere an dem die Befestigungskupplung für den Gegenstand tragenden Ende ein Ringflächenelement befestigt ist, dessen Umfang mit einem magnetischen oder optischen Informationsträger sowohl für eine den Drehwinkel repräsentierende Information als auch für eine die Null-Punkt-Drehstellung repräsentierende Information versehen ist und dass mit dem Spindelhalter eine Lesekopfanordnung zum Lesen dieser Informationen verbunden ist. Auf diese Weise trägt die Spindel unmittelbar die Informationen sowohl für die Drehrichtung als auch die Null-Punkt-Drehstellung, was sich auf die Erfassungsgenauigkeit auswirkt und diese Informationen werden mittels einer einzigen Lesekopfbaugruppe erfasst, was die Montage erleichtert.

Bei dem Informationsträger kann es sich beispielsweise um eine Beschichtung aus magnetisierbarem Material handeln, wie sie bei Magnetbändern üblich ist; es kann aber auch unmittelbar ein Magnetband oder ein Band mit optischen Informationen, z.B. in Form einer Strichskala, auf den Umfang des z.B. zylindrischen Ringflächenelements aufgeklebt sein. Bevorzugt trägt der Informationsträger zwei Informationsspuren axial nebeneinander, die die Lesekopfanordnung voneinander gesondert abtastet. Die beiden Informationen können aber auch in einer gemeinsamen Spur aufgezeichnet sein und sich durch ihren Informationsinhalt, elektronisch trennbar, voneinander unterscheiden.

Soweit es sich bei dem Informationsträger um einen auf den Umfang des Ringflächenelements aufgeklebten Magnetbandabschnitt handelt, kann der Magnetbandabschnitt vor dem Aufkleben mit periodischen, die Drehwinkeleinteilung repräsentierenden Magnetisierungsimpulsen versehen sein. Diese Vormagnetisierung des Magnetbandabschnitts vor dem Aufbringen hat jedoch den Nachteil, dass eine evtl. Dehnung des Magnetbandabschnitts beim Aufkleben zu späteren Messfehlern führt. Zu weiteren Messfehlern kann es im Bereich der Stoßstelle der beiden aneinanderstoßenden Enden des Magnetbandabschnitts kommen. Messfehler im Bereich der Stoßstelle können vermieden werden, wenn die aneinanderstoßenden Enden des Magnetbandabschnitts in der Bandebene schräg geschnitten sind, die Stoßstelle sich also über einen vergleichsweise großen Umfangsabschnitt hinweg erstreckt. Wird in einem solchen Fall die Drehwinkelinformation und ggf. die Null-Punkt-Drehstellungsinformation nach dem Aufkleben des Magnetbandabschnitts auf diesen geschrieben, so lässt sich eine sehr hohe Winkelgenauigkeit der Messung erreichen und zwar auch im Bereich des Schrägschnittstoßes.

Der optische Informationsträger kann im Auflicht, d.h. reflektierend, gelesen werden. Störungsfreier arbeiten optische Sensoren jedoch im Durchlicht in Verbindung mit einem im Durchlicht abtastbaren optischen Informationsträger, der beispielsweise die Form einer durchleuchtbaren Ringscheibe haben kann.

Bevorzugt hat das Ringflächenelement auf seiner der Spindel abgewandten Fläche optische Winkelgradmarken als Hilfe für die manuelle Ausrichtung der Spindel beim Anbringen von Unwuchtausgleichsgewichten oder Ausgleichsaussparungen.

Im Folgenden werden Ausführungsbeispiele der Erfindung anhand einer Zeichnung näher erläutert. Hierbei zeigt:
Fig. 1 einen Axiallängsschnitt durch eine Auswuchtmaschine für Werkzeughalter, gesehen entlang einer Linie I-I in Fig. 2;
Fig. 2 einen Axialquerschnitt durch die Auswuchtmaschine, gesehen entlang einer Linie II-II in Fig. 1;
Fig. 3 eine Schnittansicht der Auswuchtmaschine, gesehen entlang einer Linie III-III in Fig. 2;
Fig. 4 eine schematische Draufsicht auf eine Schwalbenschwanzführung der Auswuchtmaschine;
Fig. 5 eine Teildarstellung eines Informationsträgerrings;
Fig. 6 eine Teildarstellung einer Variante des Informationsträgerrings und
Fig. 7 eine Teildarstellung einer Variante der Auswuchtmaschine.

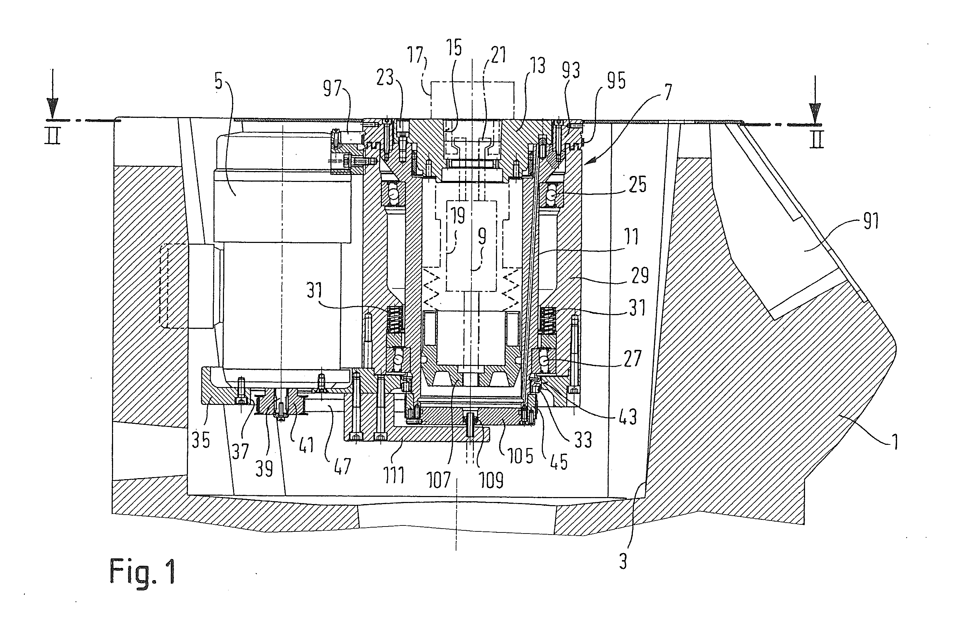

Die in den Fig. 1 bis 3 dargestellte Auswuchtmaschine hat ein als Maschinenbasis dienendes, der Standsicherheit wegen aus einem schweren Material, beispielsweise Beton oder dgl., gegossenes Gehäuse 1, das in einer von oben zugänglichen Kammer 3 eine von einem Elektromotor 5 angetriebene Spindeleinheit 7 enthält. Die Spindeleinheit 7 hat eine hier mit vertikaler Drehachse 9 angeordnete rotierende Spindel 11, die an ihrem oberen Ende einen betriebsmäßig auswechselbaren Kupplungsadapter 13 mit einer zur Drehachse 9 zentrischen Aufnahmeöffnung 15 für den Anschluss eines auszuwuchtenden, genormten, bei 17 angedeuteten Werkzeughalters aufweist. Bei dem Werkzeughalter kann es sich um einen herkömmlichen Steilkegel-Werkzeughalter oder auch um einen Hohlschaftkegel-Halter (HSK-Halter) handeln. Die Spindel 11 ist als Hohlspindel ausgebildet und enthält eine nachfolgend noch näher erläuterte Betätigungseinrichtung 19, die mit Hilfe einer Spannzange 21 den Werkzeughalter 17 während der Unwuchtmessung in dem Kupplungsadapter 13 hält. Der Kupplungsadapter 13 ist mit Schrauben 23 an der Spindel 11 befestigt und entsprechend dem Typ des Werkzeughalters austauschbar.

Die Spindel 11 ist mit zwei in axialem Abstand voneinander angeordneten Kugellagern 25, 27 in einem rohrzylindrischen Spindelhalter 29 spielfrei gelagert, wobei axiales Lagerspiel durch Vorspannfedern 31 sowie eine die Spindel 11 umschließende Federmutter 33 ausgeglichen wird.

Der Elektromotor 5 ist achsparallel zur Drehachse 9 neben der Spindeleinheit 7 angeordnet und zusammen mit dem Spindelhalter 29 auf derselben Seite eines im Wesentlichen plattenförmigen Verbindungsjochs 35 angeflanscht. Das Verbindungsjoch 35 hat eine Durchtrittsöffnung 37 für ein auf einer Welle 39 des Elektromotors 5 drehfest sitzendes Riemenrad 41 sowie eine weitere Durchtrittsöffnung 43 für die Spindel 11, die an ihrem dem Kupplungsadapter 13 abgewandten Ende ein weiteres Riemenrad 45 trägt. Ein Endlosriemen-Antrieb 47 stellt die Antriebsverbindung zwischen den Riemenrädern 41, 45 und damit zwischen dem Elektromotor 5 und der Spindel 11 her. Da der Antriebsriemen 47 nahe dem Verbindungsjoch 35 verläuft, ist die Antriebsverbindung vergleichsweise steif. Da, wie nachfolgend noch erläutert wird, die Winkelbestimmung des zu messenden Unwuchtvektors unmittelbar an der Spindel 11 erfolgt und nicht wie bei herkömmlichen Unwuchtmessvorrichtungen am Elektromotor, kann der Antriebsriemen in gewissem Umfang auch schlüpfen. Es muss also kein aufwendiger schlupffreier Zahnriemen benutzt werden.

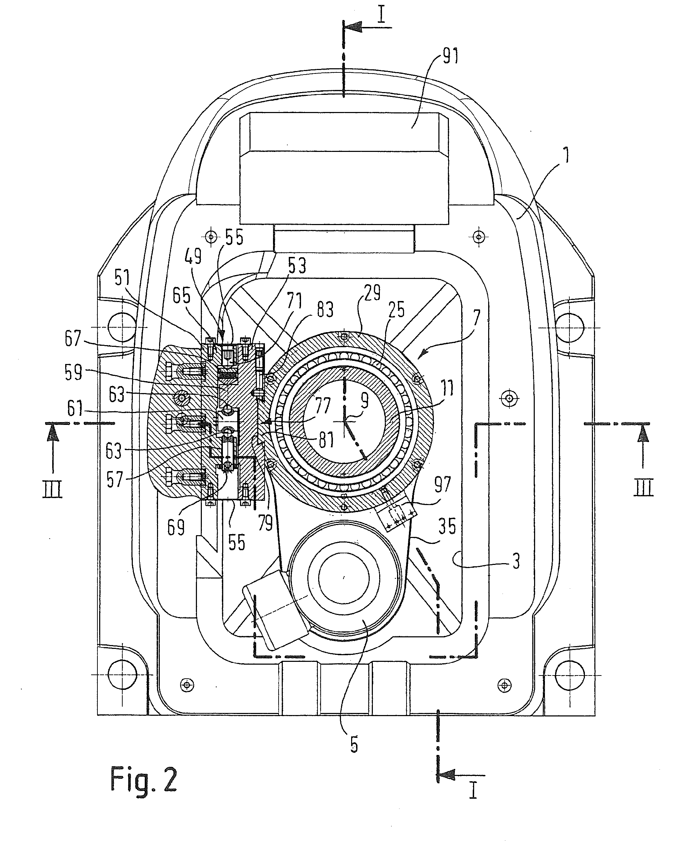

Die aus dem Elektromotor 5 und der Spindeleinheit 7 bestehende Baugruppe ist mittels einer lösbar am Spindelhalter 29 befestigten Halteraufnahme 49 am Gehäuse 1 gehalten. Die Halteraufnahme 49 umfasst zwei im Wesentlichen plattenförmige Halterelemente 51, 53, die über mehrere Blattfederelemente 55 (Figur 2) im Abstand voneinander angeordnet und aneinander befestigt sind. Die Blattfederelemente 55 verlaufen in zueinander und zur Drehachse 9 parallelen Ebenen, so dass die Blattfederelemente 55 in Abstandrichtung der Halterelemente 51, 53 wie auch in vertikaler Richtung steif sind, während die Halterelemente 51, 53 in horizontaler Richtung durch Unwucht-Fliehkräfte geringfügig auslenkbar sind. Benachbart dem oberen Ende der Spindel 11 einerseits und benachbart dem unteren Ende der Spindel 11 andererseits sind zwischen paarweise von den Halterelementen 51, 53 auf das jeweils andere Halterelement zu abstehenden Vorsprüngen 57, 59 der Halterelemente 51, 53 je einer von zwei Kraftsensoren 61 eingespannt, die die von der Spindeleinheit 7 in horizontaler Messrichtung über die Halterelemente 51, 53 auf die am oberen Ende und am unteren Ende der Spindeleinheit 7 ausgeübten Unwuchtkräfte messen. Die Kraftsensoren 61 liegen zur Vermeidung von Querkräften über Auflagekugeln 63 gelenkig an den zugeordneten Vorsprüngen 57, 59 an. An einem der Halterelemente, in der Fig. 2 dargestellt dem Halterelement 51, ist zusätzlich zum Vorsprung 57 ein weiterer Vorsprung 65 vorgesehen, zwischen die der Vorsprung 59 des anderen Halterelements 53 greift. Zwischen die Vorsprünge 65 und 59 ist ein elastisches Vorspannelement 67 eingespannt, welches für eine gewisse Vorspannung des Kraftsensors 61 sorgt. In der Messrichtung sich gegenüberliegende Einstellschrauben 69, 71 in den Vorsprüngen 57 bzw. 65 erlauben eine Positionsjustierung des Kraftsensors 61 und eine Justierung der Vorspannkraft des Vorspannelements 67. Jeder der beiden Kraftsensoren 61 und das ihm zugeordnete federnde Vorspannelement sind in Serie zueinander an einem der beiden Halterelemente vorgespannt abgestützt, während das andere Halterelement im Kraftweg zwischen dem Kraftsensor 61 und dem Vorspannelement 67 an dem Kraftsensor 61 abgestützt ist. Auf diese Weise ist sichergestellt, dass der Reaktionskraftweg des Vorspannelements 67 sich unmittelbar über ein einzelnes der Halterelemente schließt und die Blattfederelemente 55 nicht belastet werden. Die Blattfederelemente 55 sind paarweise den Kraftsensoren 61 zugeordnet und liegen sich gleichfalls paarweise in Messrichtung gegenüber. Schließlich sind auch die Vorspannelemente 67 zur Vermeidung von Querkräften zwischen Spitzen gelenkig gelagert, wie dies beispielsweise Fig. 2 zeigt.

Die am oberen und am unteren Ende der Spindeleinheit 7 im Abstand voneinander angeordneten Kraftsensoren 61 sind bezogen auf eine zur Kraftrichtung senkrechte Axiallängsebene der Spindel 11 an den beiden Halterelementen 51, 53 gespiegelt abgestützt. Wie Fig. 2 für den oberen Kraftsensor 61 zeigt, stützt sich dieser bezogen auf die Drehachse 9 im Uhrzeigersinn gesehen an dem Vorsprung 59 des spindelseitigen Halterelements 53 und gegen den Uhrzeigersinn gesehen am Vorsprung 57 des gehäuseseitigen Halterelements 51 ab. Der untere Kraftsensor 61 hingegen ist im Uhrzeigersinn gesehen am gehäuseseitigen Halterelement 51 und gegen den Uhrzeigersinn gesehen am spindelseitigen Halterelement 53 abgestützt. Dementsprechend schließt sich der Reaktionskraftweg des dem unteren Kraftsensor 61 zugeordneten Vorspannelements 67 über das spindelseitige Halterelement 53. Es versteht sich, dass die Abstützweise des unteren und des oberen Kraftsensors 61 vertauscht sein kann. Vorteil dieser Anordnungsweise ist, dass bei einer Kippbewegung der Spindel 11 beide Kraftsensoren 61 gleichsinnig entweder druckbelastet oder druckentlastet werden. Kraftrichtungsabhängige Kennlinienunterschiede der Kraftsensoren beeinflussen dementsprechend das Messergebnis nicht. Es versteht sich, dass die Vorspannelemente 67 der beiden Kraftsensoren 61 gleichfalls auf gegenüberliegenden Seiten der genannten Axiallängsschnittebene angeordnet sind.

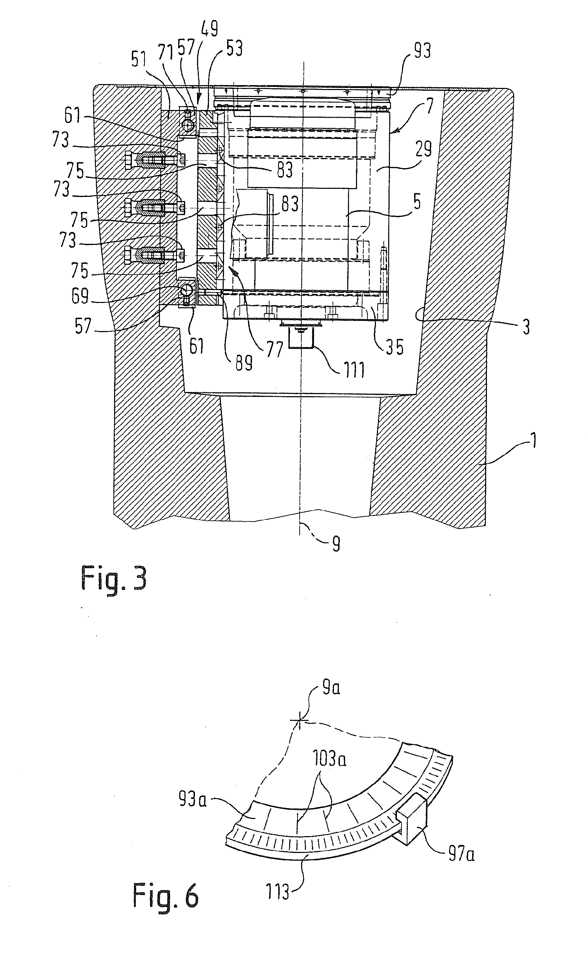

Ebenso wie die Spindeleinheit 7 und der Elektromotor 5 zu einer für sich vormontierten Baugruppe zusammengefasst sind, ist auch die Halteraufnahme 49 mit den zwischen den Halterelementen 51, 53 angeordneten Kraftsensoren 61 zu einer zweiten vormontierten Baugruppe vereinigt, die als vormontierte Baugruppe an dem Gehäuse 1 befestigt ist. Das Halterelement 51 ist hierzu mittels Schrauben 73, die über Löcher 75 in dem Halterelement 53 hindurch zugänglich sind, an dem Gehäuse 1 angeschraubt (Figur 3).

Die aus der Spindeleinheit 7 und dem Elektromotor 5 bestehende Baugruppe ist ihrerseits mittels einer allgemein mit 77 bezeichneten Schwalbenschwanzführung indexiert, d.h. in einer vorbestimmten Position relativ zu der Halteraufhängung 49 an deren gehäusefernen Halterelement 53 lösbar befestigt. Die Schwalbenschwanzführung 77 hat an dem Halterelement 53 eine achsparallel zur Drehachse 9 sich erstreckende Schwalbenschwanznut 79, in der ein Schwalbenschwanzkeil 81 längsverschiebbar geführt ist. Der Schwalbenschwanzkeil 81 ist mit Hilfe mehrerer in Längsrichtung der Schwalbenschwanzführung 77 verteilter und quer zur Längsrichtung einstellbarer Klemmschrauben 83 fixierbar.

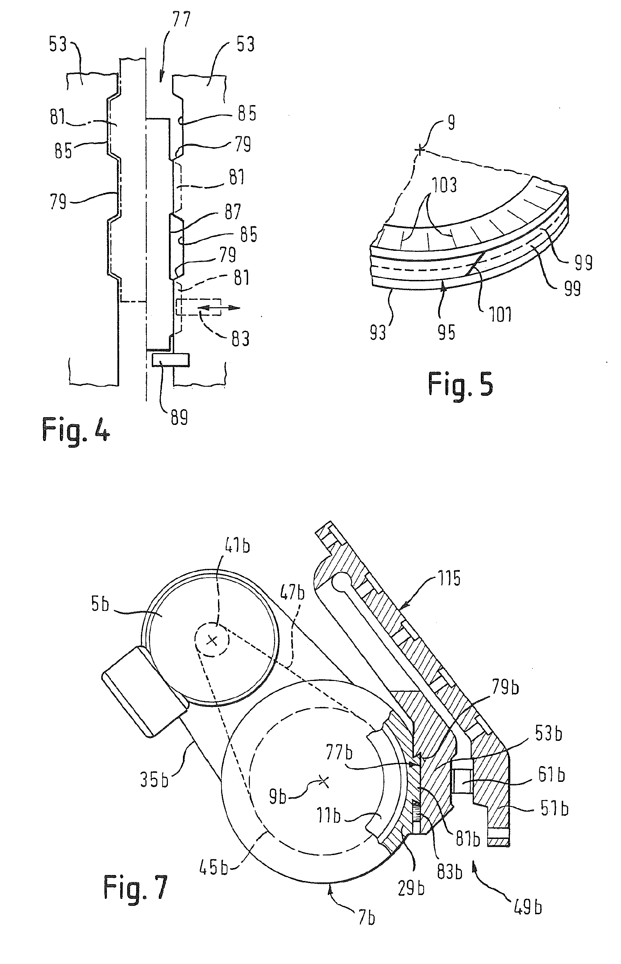

Wie Figur 4 zeigt, haben sowohl die Schwalbenschwanznut 79 als auch der Schwalbenschwanzkeil 81 mehrere Bajonettaussparungen 85 bzw. 87, die die Schwalbenschwanznut 79 und den Schwalbenschwanzkeil 81 in Längsrichtung segmentieren. Figur 4 zeigt in ihrer rechten Hälfte die Schwalbenschwanzführung 77 in ihrer indexierten Endposition, in welcher ein an dem Halterelement 53 vorgesehener Anschlagstift 89 die Endposition der Spindeleinheit 7 relativ zur Halteraufhängung 49 in Verschieberichtung der Schwalbenschwanzführung 77 festlegt. Die Segmente des Schwalbenschwanzkeils 81 überlappen hierbei die Segmente der Schwalbenschwanznut 79. Die Bajonettaussparungen 85, 87 erlauben das Anfügen der Spindeleinheit 7 quer zur Verschieberichtung der Schwalbenschwanzführung 77 nahe ihrer Endposition, da, wie Figur 4 in ihrer linken Hälfte zeigt, die Bajonettaussparungen 85, 87 Durchbrechungen für die Segmente der Bajonettnut 79 bzw. des Bajonettkeils 81 bilden. Die Segmentierung der Schwalbenschwanzführung 77 erleichtert die Montage erheblich.

Der über die Spindeleinheit 7 an der Halteraufnahme 49 hängende Elektromotor 5 übt auf die Kraftsensoren 61 ein Kragmoment aus, welches von evtl. Unwuchtschwingungen des Elektromotors 5 moduliert wird. Der sich daraus ergebende Messfehler kann gemindert werden, wenn der Momentenarm des Kragmoments soweit als möglich verringert wird, der Elektromotor 5 also möglichst nahe an die durch die Kraftmessrichtung der Kraftsensoren 61 verlaufende Vertikalebene angenähert wird. Wie beispielsweise Fig. 2 zeigt, ist hierzu die die Drehachsen 9 der Spindel 11 und die nicht näher bezeichnete Drehachse des Elektromotors 5 enthaltende Ebene so angeordnet, dass sie quer zu einer senkrecht zur Kraftmessrichtung verlaufenden Axiallängsschnittebene der Spindel 11 verläuft. Soweit es der Bauraum zulässt, kann der Zwischenwinkel dieser Ebenen ggf. auch kleiner als 90° gewählt sein.

Eine weitere Verringerung des Momentenarms wird erreicht, indem der Schwalbenschwanzkeil 81 innerhalb der Zylinderkontur des Spindelhalters 29 liegt, also in den zylindrischen Außenmantel des Spindelhalters 59 eingearbeitet ist. Diese Maßnahme vereinfacht darüber hinaus die Herstellung.

Die nicht näher dargestellte elektronische Steuerung der Unwuchtmessvorrichtung ist einschließlich der zugehörigen Bedienelemente in einer pultartigen Kammer 91 des Gehäuses 1 untergebracht. Für die Ermittlung der Unwucht nach Größe und Winkellage müssen der Steuerung Informationen sowohl über eine vorbestimmte Bezugsposition, d.h. eine Nullpunktdrehstellung der Spindel 11 relativ zu dem Spindelhalter 29 und damit relativ zu dem Gehäuse 1 als auch eine Information für die Größe der Drehwinkelabweichung der momentanen Drehstellung der Spindel 11 von dieser Bezugslage übermittelt werden. Hierzu ist an dem oberen, den Kupplungsadapter 13 tragenden Ende der Spindel ein Informationsträgerring 93 befestigt, der auf seiner kreiszylindrischen Außenfläche ringförmig einen Magnetbandabschnitt 95 trägt. Auf den Magnetbandabschnitt 95 sind in gleichbleibenden Winkelmaßabständen magnetische Winkelinformationen geschrieben, die von einer an dem Spindelhalter 29 lösbar befestigten Lesekopfanordnung 97 gelesen und der Steuerung zugeführt werden. Der Magnetbandabschnitt 95 trägt sowohl den Drehwinkel repräsentierende Informationen als auch die Information für die Nullpunktdrehstellung. Wenngleich beide Informationsarten in einer gemeinsamen Spur des Magnetbandabschnitts 95 aufgezeichnet sein können, so sind doch bevorzugt zwei nebeneinanderliegende Informationsspuren 99 (Figur 5) vorgesehen, von denen eine die Drehwinkelinformation und die andere die Nullpunkt-drehstellungsinformation enthält. Die Lesekopfanordnung 97 hat dementsprechend zwei den einzelnen Spuren 99 zugeordnete Leseköpfe.

Der Magnetbandabschnitt 95 ist in Umfangsrichtung geschlossen, wobei, wie Figur 5 zeigt, seine aneinanderstoßenden Enden in der Bandebene schräg geschnitten sind und einen unter einem spitzen Winkel zur Umfangsrichtung des Rings 93 verlaufenden Schrägschnittstoß 101 bilden. Die magnetischen Informationen werden nach dem Aufkleben des Magnetbandabschnitts 95 auf den Informationsträgerring 93 geschrieben. Dies hat den Vorteil, dass trotz des Schrägschnittstoßes 101 auch in diesem Bereich Magnetinformationen aufgezeichnetwerden können. Der Schrägschnittstoß 101 verkürzt allenfalls die axiale Höhe der für die Aufzeichnung zur Verfügung stehenden Spur.

Auf der von oben her zugänglichen Fläche des Informationsträgerrings 93 sind optische Winkelgradmarkierungen, beispielsweise in Form radialer Striche 103 angebracht, die es dem Benutzer ermöglichen, die Spindel manuell relativ zur Bezugslage auszurichten.

Der in den Kupplungsadapter 13 eingesetzte Werkzeughalter 17 wird im Betrieb von der Zange 21 fixiert. Zur Betätigung der Zange 21 ist die Spindel 11 an ihrem unteren Ende durch einen Deckel 105 (Figur 1) verschlossen und bildet einen Druckluftzylinder, in welchem ein Druckluftkolben 107 für die Betätigung der Zange 21 abgedichtet verschiebbar ist. Die Druckluftzufuhr erfolgt über eine zentrische, in ständigem Dreheingriff sich befindende Druckluft-Drehkupplung 109 am Deckel 105. Die Kupplung 109 ist an einem Tragarm 111 gehalten, der seinerseits innerhalb des vom Antriebsriemen 47 umschlossenen Bereichs angeordnet und an dem Verbindungsjoch 35 und damit an dem Spindelhalter 29 befestigt ist. Auf diese Weise wird erreicht, dass der Antriebsriemen 47 gewechselt werden kann, ohne dass der Tragarm 111 demontiert werden muss. Da die Drehkupplung 109 an dem die Spindel 11 führenden Spindelhalter 29 befestigt ist, Radialbewegungen der Spindel 11 also begleitet, kann die Drehkupplung anders als im Fall von WO 00/45983 ständig in Eingriff sein. Zur weiteren Erläuterung eines geeigneten Ausführungsbeispiels der Zange 21 und deren Betätigungsorgane wird auf WO 00/45983 Bezug genommen.

Im Folgenden werden Varianten der vorstehend anhand der Fig. 1 bis 5 erläuterten Unwuchtmessvorrichtung beschrieben. Gleichwirkende Komponenten sind mit den Bezugszahlen der Fig. 1 bis 5 bezeichnet und zur Unterscheidung mit einem Buchstaben versehen. Zur Erläuterung des Aufbaus und der Wirkungsweise wird auf die Beschreibung der Fig. 1 bis 5 Bezug genommen. Es versteht sich, dass nicht dargestellte Komponenten dieser Figuren auch in den Varianten vorhanden sein können.

Fig. 6 zeigt eine Variante einer sowohl eine Drehwinkelinformation als auch eine Nullpunkt-Drehstellungsinformation liefernden Messanordnung. Am oberen Ende der Spindel ist wiederum ein Informationsträgerring 93a angeordnet, von dessen Umfang eine mit optischen Winkelinformationen versehene Ringscheibe 113 radial absteht. Die Winkelinformationen sind wiederum in zwei nicht näher dargestellten, radial nebeneinander angeordneten Spuren aufgezeichnet und werden von der optischen Lesekopfanordnung 97a im Durchlichtverfahren gelesen.

Es versteht sich, dass die optischen Informationen auch im Auflichtverfahren, d.h. reflektierend, gelesen werden können. Andererseits kann die Ringscheibe 113 anstelle optischer Informationen auch magnetische Informationen tragen, wie die Umfangsinformation im Fall der Fig. 5 auch optisch lesbar sein kann. Auch im Ausführungsbeispiel der Fig. 6 trägt der Informationsträgerring auf seiner von oben her zugänglichen Fläche optische Winkelgradmarkierungen 103a für die manuelle Ausrichtung der Spindel zur Bezugslage.

Fig. 7 zeigt eine Variante der zwei für sich vormontierte Baugruppen umfassenden Unwuchtmessvorrichtung. Auch in dieser Ausführungsform bilden der Elektromotor 5b und die Spindeleinheit 7b eine vormontierte Baugruppe und sind gleichachsig radial nebeneinander an ihren unteren Enden an dem Verbindungsjoch 35b angeflanscht. Für die Antriebsverbindung sind Riemenscheiben 41b, 45b vorgesehen, über die der Riemen 47b läuft. Diese Baugruppe ist mittels der Schwalbenschwanzverbindung 77b lösbar an der zweiten vormontierten Baugruppe, bestehend aus der Halteraufhängung 49b und der Sensoranordnung 61b indexiert befestigt. Die Schwalbenschwanzverbindung 77b hat wiederum eine Schwalbenschwanznut 79b und einen Schwalbenschwanzkeil 81b und kann entsprechend der in Verbindung mit den Figuren 1 bis 5 erläuterten Ausführungsform bajonettartig segmentiert und durch Klemmschrauben 83b fixiert sind.

Im Unterschied zu der vorstehend erläuterten Ausführungsform erfassen die zwischen Halterelementen 51b, 53b gehaltenen Kraftsensoren 61b Unwuchtkräfte, in Richtung des Abstands der Halterelemente 51b, 53b und sind hierzu einstückig mit einer U-förmigen Schenkelfeder 115 verbunden. Die Schenkelfeder 115 nimmt das Kragmoment der an dem Halterelement 53b befestigten Baugruppe aus Motor 5b und Spindeleinheit 7b auf. Auch hier ist zur Minderung des Momentenarms der Elektromotor 5b zur Schenkelfeder 115 hin angenähert eingebaut. Es versteht sich, dass auch in dieser Ausführungsform zwei Kraftsensoren in Richtung der Drehachse 9b gegeneinander versetzt angeordnet sein können, um Kippschwingungen erfassen zu können. Die Aufhängung der Kraftsensoren 61b zwischen den Halterelementen 51b, 53b kann der Variante der Figuren 1 bis 5 entsprechen.

## Patentansprüche

1. Vorrichtung zum Messen der Rotationsunwucht eines Gegenstands, umfassend
- eine Spindeleinheit (7) mit einem Spindelhalter (29) und einer an dem Spindelhalter (29) um eine Drehachse (9) drehbar gelagerten, an einem ihrer beiden Enden eine Kupplung (13) zur Befestigung des Gegenstands (17) tragenden Spindel (11),
- eine den Spindelhalter (29) in einer vorbestimmten Messrichtung für Unwuchtkräfte auslenkbar führende Halteraufhängung (49) zur Befestigung der Spindeleinheit (7) an einer Maschinenbasis (1),
- einen die Spindel (11) rotierend antreibenden Elektromotor (5) und
- eine bei Rotation der Spindel (11) die Unwuchtkraft in der vorbestimmten Messrichtung messende Sensoranordnung (61),
**dadurch gekennzeichnet, dass**
die Spindeleinheit (7) und der Elektromotor (5) zu einer ersten vormontierten Baugruppe und die Halteraufhängung (49) und die Sensoranordnung (61) zu einer zweiten vormontierten Baugruppe vereinigt sind und dass die beiden Baugruppen einander indexiert zugeordnete Verbindungselemente (77) für die betriebsmäßig lösbare Befestigung der Baugruppen aneinander tragen.

2. Vorrichtung nach Anspruch 1, **dadurch gekennzeichnet, dass** der Elektromotor (5) gegen die Drehachse (9) der Spindel (11) versetzt achsparallel neben der Spindel (11) angeordnet und an dem Spindelhalter (29) befestigt ist, insbesondere wobei der Elektromotor (5) so angeordnet ist, dass eine die Drehachsen des Elektromotors (5) und der Spindel (11) enthaltende Ebene gegen eine zur vorbestimmten Messeinrichtung senkrechte Axiallängsebene der Spindel (11) geneigt ist.

3. Vorrichtung nach Anspruch 1 oder 2, **dadurch gekennzeichnet, dass** der Elektromotor (5) und der Spindelhalter (29) auf derselben Seite eines gemeinsamen Verbindungsjochs (35) an diesem angeflanscht sind, insbesondere wobei das der Befestigungskupplung (13) ferne Ende der Spindel (11) mittels eines Endlos-Antriebsriemens (47) in Antriebsverbindung mit dem Elektromotor (5) steht.

4. Vorrichtung nach einem der Ansprüche 1 bis 3, **dadurch gekennzeichnet, dass** die Befestigungskupplung (13) der Spindeleinheit (1) eine pneumatische Betätigungsvorrichtung aufweist, deren Druckluftzuführung eine am Spindelhalter (29) gehaltene, in ständigem Dreheingriff mit der Spindel (5) stehende Druckluft-Drehkupplung umfasst, insbesondere wobei die Druckluft-Drehkupplung (109) zentrisch zur Drehachse (9) der Spindel (11) an einem Tragarm (111) vorgesehen ist, der ausschließlich innerhalb des vom Antriebsriemen (47) umschlossenen Bereichs angeordnet ist.

5. Vorrichtung nach einem der Ansprüche 1 bis 4, **dadurch gekennzeichnet, dass** die Halteraufhängung (49) zwei in der vorbestimmten Messrichtung auslenkbar miteinander verbundene Halterelemente (51, 53) umfasst, von denen eines mit dem Spindelhalter (29) und das andere mit der Maschinenbasis (1) verbindbar ist und dass die Sensoranordnung (61) wenigstens einen zwischen den beiden Halterelementen (51, 53) gehaltenen Kraftsensor aufweist.

6. Vorrichtung nach Anspruch 5, **dadurch gekennzeichnet, dass** die Halterelemente (51, 53) im Abstand voneinander angeordnet und von wenigstens einem in Abstandsrichtung steifen, quer dazu zumindest in Messrichtung flexiblen Abstandhalter (55), insbesondere mehreren solcher Abstandhalter (55) aneinander gehalten sind, insbesondere wobei die Abstandhalter (55) als Blattfedern ausgebildet sind, deren Blattfederebene senkrecht zur Messrichtung verläuft, und/oder insbesondere wobei die Halterelemente (51, 53) paarweise aufeinander zu abstehende Vorsprünge (57, 59) haben, zwischen welchen der Kraftsensor angeordnet ist.

7. Vorrichtung nach Anspruch 5, **dadurch gekennzeichnet, dass** die Halterelemente (51b, 53b) im Abstand voneinander angeordnet sind und von wenigstens einem in der die Messrichtung definierenden Abstandrichtung flexiblen, quer dazu im Wesentlichen steifen Abstandhalter (115) aneinander gehalten sind, insbesondere wobei der Abstandhalter (115) als U-förmige Schenkelfeder ausgebildet ist.

8. Vorrichtung nach einem der Ansprüche 5 bis 7, **dadurch gekennzeichnet, dass** die Sensoranordnung (61) zwei in Richtung der Drehachse (9) der Spindel (11) im Abstand voneinander angeordnete, zwischen den beiden Halterelementen (51, 53) gehaltene Kraftsensoren aufweist, die bezogen auf eine zur Kraftmessrichtung senkrechte Axiallängsebene der Spindel (11) an den beiden Halterelementen (51, 53) gespiegelt abgestützt sind.

9. Vorrichtung nach einem der Ansprüche 5 bis 8, **dadurch gekennzeichnet, dass** jedem Kraftsensor (61) ein dem Kraftsensor (61) in der vorbestimmten Kraftmessrichtung vorspannendes Federelement (67) zugeordnet ist, insbesondere wobei der Kraftsensor (61) und das ihm zugeordnete Federelement (67) in Serie zueinander an einem der beiden Halterelemente (51, 53) vorgespannt abgestützt sind und das andere Halterelement (51) im Kraftweg zwischen dem Kraftsensor (61) und dem Federelement (67) an dem Kraftsensor (61) abgestützt ist und/oder insbesondere wobei der Kraftsensor (61) oder/und das Federelement (67) in der Kraftmessrichtung beiderseits zwischen Gelenklagern, insbesondere Kugeln oder Spitzen, gehalten ist.

10. Vorrichtung nach einem der Ansprüche 1 bis 9, **dadurch gekennzeichnet, dass** die Verbindungselemente (77) der beiden Baugruppen zur Anlage aneinander bestimmte Fügeflächen (79, 81) aufweisen, die eine vorbestimmte Positionierung in der vorbestimmten Messrichtung und wenigstens einer dazu senkrechten Richtung ermöglichen.

11. Vorrichtung nach Anspruch 10, **dadurch gekennzeichnet, dass** die Verbindungselemente als Schwalbenschwanzführung (77) ausgebildet sind und Klemmmittel (83) zur Fixierung umfassen, insbesondere wobei die Verschieberichtung der Schwalbenschwanzführung (77) in Richtung der Drehachse (9) der Spindel (11) verläuft.

12. Vorrichtung nach Anspruch 11, **dadurch gekennzeichnet, dass** die Schwalbenschwanzführung (77) Schwalbenschwanz-Führungsflächen (79, 81) aufweist, von denen eine (81) unmittelbar an dem Spindelhalter (29) angeformt ist, insbesondere wobei der Spindelhalter (29) im Wesentlichen eine zylindrische Außenkontur hat, die die angeformte Schwalbenschwanz-Führungsfläche (81) außen umschließt.

13. Vorrichtung nach einem der Ansprüche 11 bis 12, **dadurch gekennzeichnet, dass** der Schwalbenschwanzführung (77) ein Indexier-Endanschlag (89) in Verschieberichtung zugeordnet ist.

14. Vorrichtung nach einem der Ansprüche 11 bis 13, **dadurch gekennzeichnet, dass** die Schwalbenschwanzführung (77) einander zugeordnete Schwalbenschwanz-Führungsflächen (79, 81) mit Bajonett-Aussparungen (85, 87) aufweist, die ein Zusammenstecken quer zur Verschieberichtung der Schwalbenschwanzführung (77) erlauben.

15. Vorrichtung nach einem der Ansprüche 10 bis 14, **dadurch gekennzeichnet, dass** die Verbindungselemente (77) an dem Spindelhalter (29) und der Halteraufhängung (49) vorgesehen sind.

16. Vorrichtung nach einem der Ansprüche 1 bis 15, **dadurch gekennzeichnet, dass** an einem der axialen Enden der Spindel (11), insbesondere an dem die Befestigungskupplung (13) für den Gegenstand (17) tragenden Ende ein Ringflächenelement (93) befestigt ist, dessen Umfang mit einem magnetischen oder optischen Informationsträger (95; 113) sowohl für eine den Drehwinkel repräsentierende Information als auch für eine die Nullpunktdrehstellung repräsentierende Information versehen ist und dass mit dem Spindelhalter (29) eine Lesekopfanordnung (97; 97a) zum Lesen dieser Informationen verbunden ist, insbesondere wobei der Informationsträger (95; 113) zwei Informationsspuren (99) nebeneinander aufweist, die die Lesekopfanordnung (97; 97a) voneinander gesondert abtastet.

17. Vorrichtung nach Anspruch 16, **dadurch gekennzeichnet, dass** der Informationsträger als auf den Umfang des Ringflächenelements (93) aufgeklebter Magnetbandabschnitt (95) ausgebildet ist, dessen aneinanderstoßende Enden in der Bandebene schräg geschnitten sind, insbesondere wobei die den Drehwinkel oder/und die Nullpunktdrehstellung repräsentierenden Informationen auch den Bereich des Schrägschnittstoßes (101) des Magnetbandabschnittes (95) überlappen.

18. Vorrichtung nach Anspruch 16, **dadurch gekennzeichnet, dass** der Informationsträger als im Durchlicht abtastbarer optischer Informationsträger, insbesondere in Form einer Ringscheibe (113) ausgebildet ist.

19. Vorrichtung nach einem der Ansprüche 16 bis 18, **dadurch gekennzeichnet, dass** das Ringflächenelement (93) auf seiner der Spindel (11) abgewandten Fläche optische Winkelgradmarkierungen (103) aufweist.
